# EUROPÄISCHE PATENTSCHRIFT

(11) **EP 1 678 429 B1**
(45) Veröffentlichungstag und Bekanntmachung des Hinweises auf die Patenterteilung: **09.04.2008**
(21) Anmeldenummer: 04765778.8
(22) Anmeldetag: 02.10.2004
(51) Int. Cl.: F16D 25/10, F16D 25/0638, F16D 13/68, F16D 13/52

(54) **KUPPLUNGSANORDNUNG IN EINEM GETRIEBE MIT ZWEI AXIAL UND RADIAL BENACHBARTEN KUPPLUNGEN**
CLUTCH ASSEMBLY IN A GEARBOX COMPRISING TWO AXIALLY AND RADIALLY ADJOINING CLUTCHES
ENSEMBLE EMBRAYAGE DANS UNE BOITE DE VITESSES EQUIPEE DE DEUX EMBRAYAGES VOISINS DANS LE SENS AXIAL ET RADIAL

(30) Priorität: 30.10.2003 DE 10350573
(43) Veröffentlichungstag der Anmeldung: 12.07.2006
(73) Patentinhaber: ZF FRIEDRICHSHAFEN Aktiengesellschaft, 88038 Friedrichshafen (DE)
(72) Erfinder: TIESLER, Peter, 88074 Meckenbeuren (DE); DAUSEND, Jörg, 57460 Kerbach (FR)
(86) Internationale Anmeldenummer: PCT/EP2004/011029
(87) Internationale Veröffentlichungsnummer: WO 2005/052402

(56) Entgegenhaltungen:
- DE-A- 10 013 180
- DE-A1- 2 619 479
- US-A- 3 922 932
- US-A- 4 440 282
- US-A- 4 732 253
- US-A- 4 813 522

## Beschreibung

Die Erfindung betrifft eine Kupplungsanordnung in einem Getriebe, insbesondere in einem Automatgetriebe oder automatisierten Schaltgetriebe, gemäß dem Oberbegriff des Patentanspruchs 1 und wie aus der US 4 732 253 bekannt.

Für die Anordnung von Kupplungen und deren Betätigungsvorrichtungen in Automatgetrieben gibt es vielfältige bekannte Beispiele. So zeigt die US 6,120,410 eine Kupplungsanordnung in einem Automatgetriebe, bei der ein im Querschnitt etwa topfförmig ausgebildetes Bauteil als Außenlamellenträger ausgebildet ist. Radial innerhalb dieses Außenlamellenträgers sind die Innen- und Außenlamellen von zwei axial nebeneinander und auf gleicher radialer Höhe angeordneten Lamellenkupplungen, Kolben-Zylinder-Anordnungen mit jeweils einem Betätigungskolben für die Betätigung der beiden Kupplungen sowie Druckausgleichsräume für einen dynamischen Druckausgleich hinsichtlich der Betätigungskraft der Betätigungskolben ausgebildet.

Außerdem ist aus der nicht vorveröffentlichten deutschen Patentanmeldung DE 103 33 431.9 der Anmelderin eine Kupplungsanordnung in einem Automatgetriebe bekannt, mit zwei axial benachbarten Lamellenkupplungen, denen jeweils eine Kolben-Zylinder-Anordnung zur axialen Kupplungsbetätigung, jeweils ein Druckausgleichsraum für einen dynamischen Kupplungsbetätigungsdruckausgleich sowie jeweils Mittel zur Schmier- beziehungsweise Kühlmediumversorgung zugeordnet sind. Diese Kupplungsanordnung zeichnet sich dadurch aus, dass die beiden Kupplungen radial hintereinander angeordnet sind, dass der Druckausgleichsraum für die radial äußere Kupplung axial an den Druckraum für die Betätigung des Kolbens der radial inneren Kupplung angrenzt, und dass der Schmier- beziehungsweise Kühlmediumstrom für die radial äußere Kupplung direkt aus dem Druckausgleichsraum für die Betätigung der äußeren Kupplung abgreifbar ist.

Darüber hinaus ist dieser Druckschrift entnehmbar, dass zwischen dem Druckraum zur Betätigung des Kolbens der radial inneren Kupplung und dem Druckausgleichsraum für den Kolben der radial äußeren Kupplung ein gemeinsamer Lamellenträger für beide Kupplungen angeordnet ist, an dem sowohl die Innenlamellen der radial äußeren Kupplung als auch die Außenlamellen der radial inneren Kupplung gemeinsam drehfest und axial verschieblich befestigt sind.

Schließlich ist der nicht vorveröffentlichten deutschen Patentanmeldung DE 103 33 437.8 eine mit der letztgenannten Kupplungsanordnung vergleichbare Kupplungsanordnung bekannt, bei der die Endlamellen der radial inneren und der radial äußeren Lamellenkupplung hinsichtlich ihrer axialen Beweglichkeit durch einen radial inneren beziehungsweise radial äußeren Sprengring am gemeinsamen Innenlamellenträger gesichert sind. Zur Aufnahme dieser beiden Sprengringe sind an dem gemeinsamen Innenlamellenträger jeweils Einstechungen ausgebildet, deren Herstellung vergleichsweise aufwendig und teuer ist.

Zudem ist diese Druckschrift als weitere Variante entnehmbar, dass ein an dem gemeinsamen Innenlamellenträger ein Einstich zur Aufnahme eines Sprengrings für die Endscheibe der Außenlamellen des radial inneren Lammelenpaketes spanend hergestellt ist, während sich die Endlamelle des radial äußeren Lamellenpaketes an der Einstich-Durchstellung abstützt. Dabei wird diese Einstich-Durchstellung durch dasjenige Material gebildet, welches durch den Einstich radial durch den gemeinsamen Innenlamellenträger hindurchgedrückt wurde. Diese technische Lösung ist zwar fertigungstechnisch kostengünstiger, sie ist jedoch mit dem Nachteil verbunden, dass die axiale Position des äußeren Lamellenpaketes abhängig von der Position des inneren Lamellenpaketes und damit nicht bauraumoptimal wählbar ist.

An dieser Stelle setzt die Erfindung an, deren Aufgabe es ist, eine bauraumsparende Kupplungsanordnung für ein Getriebe vorzustellen, die aufgrund ihrer Konstruktionsmerkmale kostengünstig herstellbar ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach geht die Erfindung aus von einer Kupplungsanordnung in einem Getriebe, insbesondere in einem Automatgetriebe oder automatisierten Schaltgetriebe, mit zwei axial und radial benachbarten Lamellenkupplungen B und E, bei der die Innenlamellen der radial inneren Kupplung E auf einem Innenlamellenträger und die Außenlamellen der radial äußeren Kupplung B auf einem Außenlamellenträger angeordnet sind. Zudem ist bei dieser Kupplungsanordnung vorgesehen, dass die Innenlamellen der radial äußeren Kupplung B und die Außenlamellen der radial inneren Kupplung E auf einem gemeinsamen Lamellenträger angeordnet sind, dass die jeweiligen Innenlamellen und Außenlamellen der beiden Kupplungen B, E axial wechselweise zueinander angeordnet Lamellenpakete bilden, und dass jedem Lamellenpakt ein Betätigungskolben von druckmittelbetätigbaren Servoeinrichtungen zum axialen Zusammenpressen der Lamellenpakte zugeordnet ist. Die beiden Servoeinrichtungen sind dabei derart angeordnet, dass die Kupplungen B und E in die gleiche axiale Richtung schließend betätigbar sind. Außerdem ist bei dieser Kupplungsanordnung vorgesehen, dass die Lamellen des radial inneren Lamellenpaketes axial gegen einen am gemeinsamen Lamellenträger befestigten Sicherungsring pressbar sind. Darüber hinaus ist die Kupplungsanordnung zur Lösung der gestellten Aufgabe dadurch gekennzeichnet, dass die Lamellen des radial äußeren Lamellenpaketes axial gegen einen Anlageabschnitt des gemeinsamen Lamellenträgers pressbar sind, der aus einem radial nach außen weisenden Endbereich des gemeinsamen Lamellenträgers besteht.

Durch diese erfindungsgemäße Bauweise kann die axiale Länge der Kupplungsanordnung gegenüber bekannten Lösungen vorteilhaft kurz gehalten werden, was bei den beengten Verhältnissen im Getriebe bekanntermaßen von besonderer Bedeutung ist, insbesondere bei Automatgetrieben und auch bei automatisierten Schaltgetrieben in Bauart eines Doppelkupplungsgetriebes.

Darüber hinaus kann vorgesehen sein, dass der gemeinsame Lamellenträger aus einem Blechumformteil besteht, bei dem der Anlageabschnitt integraler Bestandteil desselben und durch einen Umformvorgang gebildet ist. Dadurch lässt sich der gemeinsame Lamellenträger besonders preisgünstig herstellen sowie die Position der beiden Lamellenpakete zueinander beliebig und einfach wählen.

In einer anderen Weiterbildung der Erfindung sind die beiden Lamellenpakete an ihren von den Kolben wegweisenden Seite axial jeweils durch eine Endlamelle begrenzt, so dass diese Endlamellen an dem genannten Sicherungsring beziehungsweise an dem Anlageabschnitt zur Anlage gelangen.

Eine andere Ausgestaltung einer erfindungsgemäß ausgebildeten Kupplungsanordnung sieht vor, dass der Sicherungsring in einer Aufnahmenut am gemeinsamen Lamellenträger befestigt ist. Diese Aufnahmenut besteht vorzugsweise aus zueinander beabstandeten radialen Öffnungen, die umfangsverteilt an dem gemeinsamen Lamellenträger ausgebildet sind.

Zudem wird es als vorteilhaft angesehen, wenn die die Aufnahmenut bildenden Öffnungen durch Materialeinstiche geformt sind, durch die als Durchstellungen bezeichnetes Blechmaterial des gemeinsamen Lamellenträgers radial nach außen weisen. Dieser Aufbau vermeidet herstellkostensparend eine spanende Bearbeitung des gemeinsamen Lamellenträgers.

In Weiterbildung dieser Bauweise kann vorgesehen sein, dass das Profil der Kupplungslammellen, insbesondere der Innenlamellen der radial äußeren Kupplung B sowie die radiale Erstreckung der Durchstellungen derart gewählt ist, dass an der radialen Außenseite des gemeinsamem Lamellenträgers genügend Raum für die ganz oder teilweise über den Bereich der Materialeinstiche platzierte Endlamelle der radial äußeren Kupplung B vorhanden ist.

Des weiteren kann vorgesehen sein, dass der Anlageabschnitt des gemeinsamen Lamellenträgers derart geformt ist, dass die Steifigkeit von letzterem positiv beeinflusst ist.

Zur Gewährleistung einer problemlosen Kupplungsbetätigung, insbesondere mit radial nicht gekippter Endlamelle des radial äußeren Lamellenpaketes wird außerdem vorgeschlagen, dass der Anlageabschnitt des gemeinsamen Lamellenträgers an seiner axial zu dem Lamellenpaket der radial äußeren Kupplung B weisenden Seite umfangsverteilte Anlagenoppen oder einen Anlagering aufweist, an der die Endlamelle des Lamellenpaketes.der Kupplung B bei einer Beaufschlagung durch den zugeordneten Betätigungskolben zur Anlage kommt.

In einer anderen Ausführungsform der Erfindung kann vorgesehen sein, dass die genannte Endlamelle der radial äußeren Kupplung B an ihrer axial zu dem Anlageabschnitt des gemeinsamen Lamellenträgers weisenden Seite eine radial gestufte Oberfläche ausweist.

Die Anlagenoppen, der Anlagering oder die Stufe an dieser Endlamelle sind dabei vorzugsweise derart ausgebildet, dass radial unterhalb dieser Teile des Anlageabschnittes befindliche Bestandteile des gemeinsamen Lamellenträger axial übergriffen werden und ein Kippen der Endlamelle gegen eine exakte radiale Ausrichtung vermieden wird.

Zur Verdeutlichung der Erfindung ist der Beschreibung eine Zeichnung beigefügt, in der zwei erfindungsgemäß ausgebildete Kupplungsanordnungen schematisch dargestellt sind.
Im einzelnen zeigt:
- Fig. 1: einen Querschnitt durch ein Automatgetriebe im Bereich von zwei Lamellenkupplungen gemäß einer ersten Variante,
- Fig. 2: einen Teilquerschnitt A-A durch die Kupplungsanordnung gemäß Fig. 1,
- Fig. 3: einen Querschnitt durch ein Automatgetriebe im Bereich von zwei Lamellenkupplungen gemäß einer zweiten Variante,
- Fig. 4: einen Teilquerschnitt F-F durch die Kupplungsanordnung gemäß Fig. 3,
- Fig. 5: eine Ausschnittsvergrößerung aus Fig. 1 im Bereich der Kupplungslamellenpakete und
- Fig. 6: eine Ausschnittsvergrößerung aus Fig. 3 ebenfalls im Bereich der Kupplungslamellenpakete.

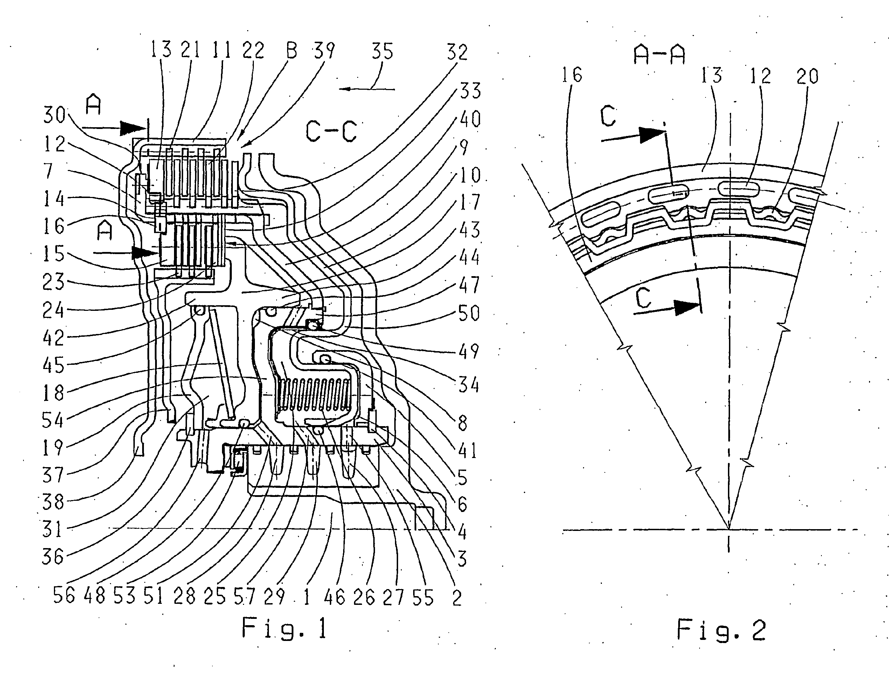

Demnach zeigt Fig. 1 ein Querschnitt durch ein Getriebe im Bereich von zwei Lamellenkupplungen B und E, die sowohl radial als auch axial unmittelbar benachbart zueinander in einem Getriebegehäuse 2 angeordnet sind. Der Aufbau der hier gewählten Kupplungsnordung sieht dabei vor, dass die Kupplung E radial direkt unterhalb der äußeren Kupplung B angeordnet ist.

Fig. 2 zeigt eine Schnittdarstellung des Bereiches A-A gemäß Fig. 1, gesehen aus der durch die beiden Pfeile in Fig. 1 markierten Richtung. Die in Fig. 2 eingezeichnete Schnittebene C-C markiert die Seitenansicht der Bauteile im Bereich der erwähnten Schnittlinie in Fig. 1.

Zu den Kernkomponenten dieser Kupplungsanordnung gehören zwei Lamellenpakte 39 und 40, entsprechende Außen- und Innenlamellenträger 37, 38 sowie Kupplungsbetätigungskolben 10, 17 von druckmittelbetätigbaren Servoeinrichtungen, mit deren Hilfe die beiden Kupplungen in die gleiche Betätigungsrichtung geschlossen werden können. Bei dieser Kupplungsanordnung ist die konstruktive Ausbildung eines gemeinsamen Lamellenträgers 9 von besonderer Bedeutung.

Dieser gemeinsame Lamellenträger 9 ist vorzugsweise aus einem umgeformten Blechstück gebildet und verfügt über einen radialen Abschnitt, der im Bereich der getriebegehäusenahen Seite der Kupplungen E, B angeordnet ist, sowie über einen im wesentlichen horizontalen Abschnitt, an dem die Innenlamellen 22 der radial äußeren Kupplung B und die Außenlamellen 24 der radial inneren Kupplung E axial verschiebbar und drehfest angeordnet sind.

Zudem gehört zu dieser Kupplungsanordnung der Außenlamellenträger 38 der äußeren Kupplung B sowie der Innenlamellenträger 37 der inneren Kupplung E, die beide auf der getriebegehäusefernen Seite der beiden Kupplungen E und B angeordnet und mit hier nicht weiter dargestellten Getriebewellen drehfest verbunden sind.

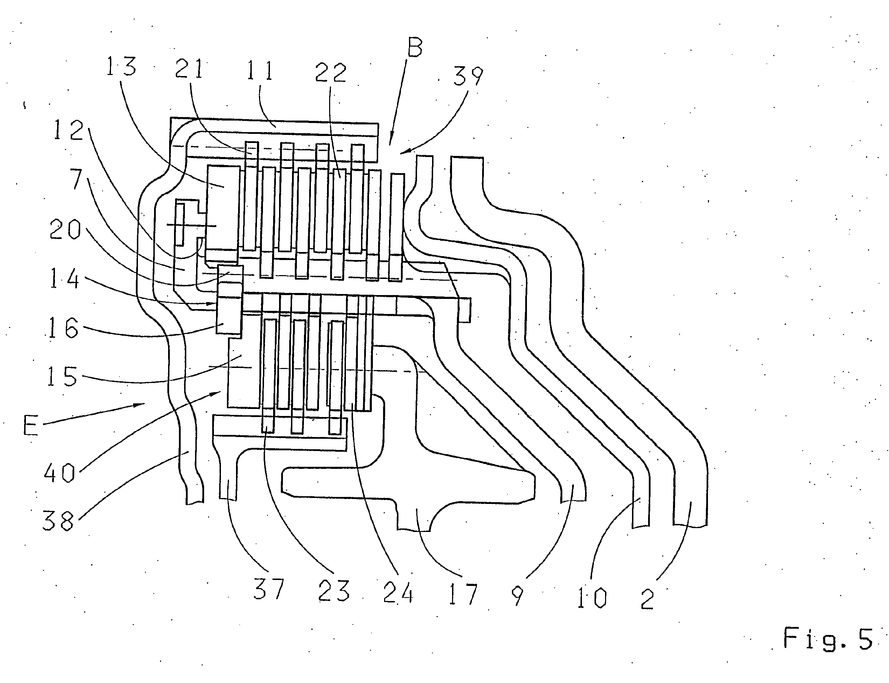

Wie insbesondere die Ausschnittsvergrößerung gemäß Fig. 5 zeigt, sind an dem gemeinsamen Lamellenträger 9 Widerlager für die Lamellenpakete 39, 40 der beiden Kupplungen B, E vorhanden, gegen die sich von den genannten Betätigungskolben 10, 17 auf die Lamellen 21, 22; 23, 24 ausgeübten Betätigungskräfte über Endlamellen 13, 15 abstützen. Dabei liegt die Endlamelle 15 der radial inneren Kupplung E axial an einem Sprengring 16 an, der in eine Aufnahmenut 14 auf dem gemeinsamen Lamellenträger 9 eingespannt ist.

Diese Aufnahmenut 14 ist in dem hier gewählten Ausführungsbeispiel durch Einstiche in den gemeinsamen Lamellenträger 9 gebildet, deren Blechmaterial-Umformung 20 am gemeinsamen Innenlamellenträger 9 radial nach außen weisen. Dabei ist das Aufnahmeprofil für die Endlamelle 13 des radial äußeren Lamellenpaketes 39 sowie die radiale Erstreckung der Durchstellungen der Einstiche derart gewählt, dass noch genügend Raum für die ganz oder teilweise über dem Bereich der Umformungen 20 liegenden Endlamelle 13 des Lamellenpaketes 39 vorhanden ist. Im Prinzip entstehen diese Umformungen 20 also durch einen kombinierten Einschneide- und Prägevorgang mit einem Messer definierter Kontur, wobei der Schneidevorgang mit einer definierten Einschneidetiefe, ausgehend vom innenliegenden Lamellenmitnahmeprofil der Lamellenträger 9, radial nach außen erfolgt.

Alternativ kann vorgesehen sein, dass die die Aufnahmenut 14 bildenden Öffnungen des gemeinsamen Lamellenträgers 9 spanabhebend hergestellt sind in Form einer am Umfang durch Zahnlücken unterbrochenen, umlaufenden Nut.

Darüber hinaus ist Fig. 1 und Fig. 2 entnehmbar, dass an dem vom Getriebegehäuse 2 wegweisenden Rand des gemeinsamen Lamellenträgers 9 ein Anlageabschnitt 7 zur Anlage der Endlamelle 13 der radial äußeren Kupplung B ausgebildet ist. Dieser Anlageabschnitt 7 besteht vorzugsweise aus einem radial nach außen umgeformten axialen Ende 30 des gemeinsamen Innenlamellenträgers 9.

Dieser Anlageabschnitt 7 ist dabei vorzugsweise so ausgebildet, dass er eine versteifende Wirkung auf den gemeinsamen Lamellenträger 9 ausübt, welches sich insbesondere bezüglich der mechanischen Festigkeit und Steifigkeit dieses Blechbauteils bei vergleichsweise hohen Drehzahlen und unter vergleichsweise hoher Last sehr vorteilhaft auswirkt.

Ein weiterer Aspekt der Erfindung betrifft die sichere Anlage der Endlamelle 13 der radial äußeren Kupplung B an dem radialen Anlageabschnitt 7 des gemeinsamen Lamellenträgers 9. Dazu ist in dieser Ausführungsvariante der Erfindung vorgesehen, dass an dem Anlageabschnitt 7 axial ausgerichtete Anlagenoppen 12 ausgebildet sind, die axial in Richtung zu der Endlamelle 13 des Lamellenpaketes 39 der Kupplung B weisen. Anstelle der Anlagenoppen 12 kann dieser Anlageabschnitt 7 gleichwirkend auch über einen axial zu den Lamellen 21, 22 der Kupplung B weisenden Ringsteg verfügen.

Auf der dem Sprengring 16 beziehungsweise dem Anlageabschnitt 7 axial gegenüber liegenden Seite der Kupplungslamellen 21, 22; 23, 24 ist an jeder der beiden Kupplungen B, E auf dem gemeinsamen Lamellenträger 9 ein Andruckring 32, 33 (z. B. in Form einer Wellfeder) axial verschiebbar angeordnet, gegen die mittels der genannten Kolben 10, 17 zum Schließen der Kupplungen eine Betätigungskraft ausübbar ist. Die Schließkraft wirkt bei beiden Kupplungen E, B in die gleiche Richtung 35.

Die Servoeinrichtungen zur Betätigung der beiden Kupplungen sind als in das Getriebe integrierte Kolben-zylinder-Anordnungen ausgebildet. In dem hier dargestellten Ausführungsbeispiel der Erfindung ist der Zylinder der Betätigungsanordnung für die radial äußere Kupplung B zweiteilig ausgebildet, wobei ein Zylinderabschnitt 5 hier beispielsweise aus einem Blechteil mit einem radial und einem axial ausgerichteten Abschnitt besteht.

Dieses als Blechumformteil oder aber durch ein Druckgussverfahren hergestellte Bauteil 5 ist auf einer Nabe 3 aufgesteckt und mittels eines Sicherungsringes 4 gegen ein axiales Verschieben in Richtung zu dem Getriebegehäuse 2 gesichert. Durch diese Bauweise bildet die radial nach außen weisende Seite der Nabe 3 den zweiten Teil des Zylinders der Betätigungsanordnung für die radial äußere Kupplung B.

Die Nabe 3 ist koaxial zu den Lamellenpaketen 39, 40 der beiden Kupplungen B, E ausgerichtet, sitzt auf einem axialen Fortsatz 52 des Getriebegehäuses 2 und ist dort an einem Axiallager 53 axial gelagert. Zu beachten ist in diesem Zusammenhang noch, dass an der Nabe 3 ein sich radial erstreckender Abschnitt 54 ausgebildet ist, der Bestandteil des gemeinsamen Lamellenträgers 9 oder mit diesem zumindest wirkverbunden ist.

Zurückkommend auf die Betätigungs- beziehungsweise Servoeinrichtung für die radial äußere Kupplung B ist zu erwähnen, dass zu dieser der bereits erwähnte Betätigungskolben 10 gehört, der in dem Zylinder 5 unter Bildung eines Druckraumes 6 axial verschiebbar aufgenommen ist. Dieser Kolben 10 ist nahe dem Getriebegehäuse 2 zu der radial äußeren Kupplung B geführt und auf deren Andruckring 32 zur Anlage gebracht.

Auf der von Druckraum 6 abgewandeten Seite des Betätigungskolbens 10 ist eine Druckausgleichskammer 25 für diesen Kolben 10 ausgebildet, wobei andere Wandungsteile durch die Nabe 3 beziehungsweise durch deren radialen Abschnitt 54 gebildet sind.

In diesem Druckausgleichsraum 25 ist eine achsparallel zur Betätigungsrichtung 35 ausgerichtete Rückstellfeder 26 angeordnet, deren eines Ende gegen die druckausgleichskammerferne Seite des Betätigungskolbens 10 drückt und deren anderes Ende sich an einem Staublech 34 abstützt.

Das Staublech 34 ist seinerseits zwischen dem radialen Abschnitt 54 der Nabe 3 und einem achsparallelen Abschnitt 47 des gemeinsamen Lamellenträgers 9 derart eingeklemmt, dass dieses im Bereich des Abschnittes 47 an einem achsparallelen Abschnitt 50 des Betätigungskolbens 10 aufliegt.

Zu erwähnen ist in diesem Zusammenhang, dass zwischen dem Betätigungskolben 10 und dem Zylinderteil 5 beziehungsweise der Nabe 3, sowie zwischen dem Kolben 10 und dem Staublech 34 Dichtelemente 41, 46, 49 angeordnet sind, mit deren Hilfe der Druckraum 6 und der Druckausgleichsraum 25 gegeneinander sowie gegen nicht druckbeaufschlagte Getriebebereiche angedichtet sind.

Die Versorgung des Druckraums 6 für die Kolben-Zylinder-Anordnung 3, 5, 10 zur Betätigung der äußeren Kupplung B mit einem Betätigungsdruckmittel erfolgt über eine Bohrung 55 in der Nabe 3, die ihrerseits mit einer Bohrung oder Umfangsnut 27 in dem Fortsatz 52 des Getriebegehäuses 2 strömungstechnisch verbunden ist.

Die Befüllung des Druckausgleichsraumes 25 mit einem Schmier- und/oder Kühlmittel erfolgt über eine Bohrung 57 in der Nabe 3, die von einer Bohrung oder Umfangsnut 29 in dem Fortsatz 52 des Getriebegehäuses 2 gespeist wird, die ihrerseits mit einer Bohrung in der Antriebswelle 1 in Verbindung steht.

Hinsichtlich der Befüllung des Druckraumes 8 zur Betätigung der radial innen liegenden Kupplung E ist vorgesehen, dass diese über eine Bohrung 51 in der Nabe 3 erfolgt, die mit einer gesonderten Bohrung oder Ringnut 28 in dem Fortsatz 52 des Getriebegehäuses 2 in Strömungsverbindung steht.

Die Betätigungsvorrichtung für die radial innere Kupplung E wird durch eine Kolben-Zylinder-Anordnung gebildet, dessen bereits genannter Druckraum 8 durch einen achsparallelen Abschnitt der Nabe 3, der von dem Staublech 34 wegweisenden Seite des radialen Abschnitts 54 der Nabe 3 sowie einem Abschnitt 43 des Betätigungskolbens 17 dieser Betätigungsvorrichtung begrenzt wird.

Der Betätigungskolben 17 zur Betätigung der radial inneren Kupplung E hat eine etwa "t"-förmige Querschnittsgeometrie mit einen radial inneren Abschnitt, einen radial äußeren Abschnitt, einen von dem gemeinsamen Lamellenträger 9 wegweisenden linksseitigen "t"-Schenkel 42 und einen zu dem gemeinsamen Lamellenträger 9 weisenden rechtsseitigen "t"-Schenkel 43. Der.zum gemeinsamen Lamellenträger 9 weisende "t"-Schenkel 43 wird dabei auf dem achsparallelen Abschnitt 47 des gemeinsamen Lamellenträgers 9 axial geführt.

Der Druckraum 8 ist außerdem über ein Dichtmittel 44 zwischen zu dem gemeinsamen Lamellenträger 9 und dem rechten "t"-Schenkel 43 des Betätigungskolbens 17 sowie über ein Dichtmittel 48 am radial innersten Abschnitt des Betätigungskolbens 17 gegen die Nabe 3 abgedichtet.

Auf der dem Druckraum 8 der Betätigungsvorrichtung für die innere Kupplung E gegenüberliegenden Seite des Betätigungskolbens 17 ist ein Druckausgleichsraum 31 für diesen Kolben 17 ausgebildet. Er wird über eine Bohrung 56 in der Nabe 3 sowie eine hier nicht dargestellte Bohrung in der Getriebewelle 1 mit Kühl- beziehungsweise Schmiermittel versorgt.

In diesem Druckausgleichsraum 31 ist zudem eine Rückstellfeder 18 angeordnet, die sich axial mit ihrer einen Seite an dem Betätigungskolben 17 und mit ihrer anderen Seite an einer Stauscheibe 19 abstützt. Diese Stauscheibe 19 ist auf der Nabe 3 aufgesteckt und mittels eines Sprengringes 36 axial gesichert. Zudem trägt diese Stauscheibe 19 an ihrem radialen Ende ein Dichtmittel 45, mit dessen Hilfe die Druckausgleichskammer 31 gegen den linken "t"-Schenkel des Lamellenträgers 9 abgedichtet ist.

Zudem wird auf den Außenlamellenträger 38 der radial äußeren Kupplung B hingewiesen, der an einem achsparallelen radial äußeren Abschnitt 11 die Außenlamellen 21 trägt.

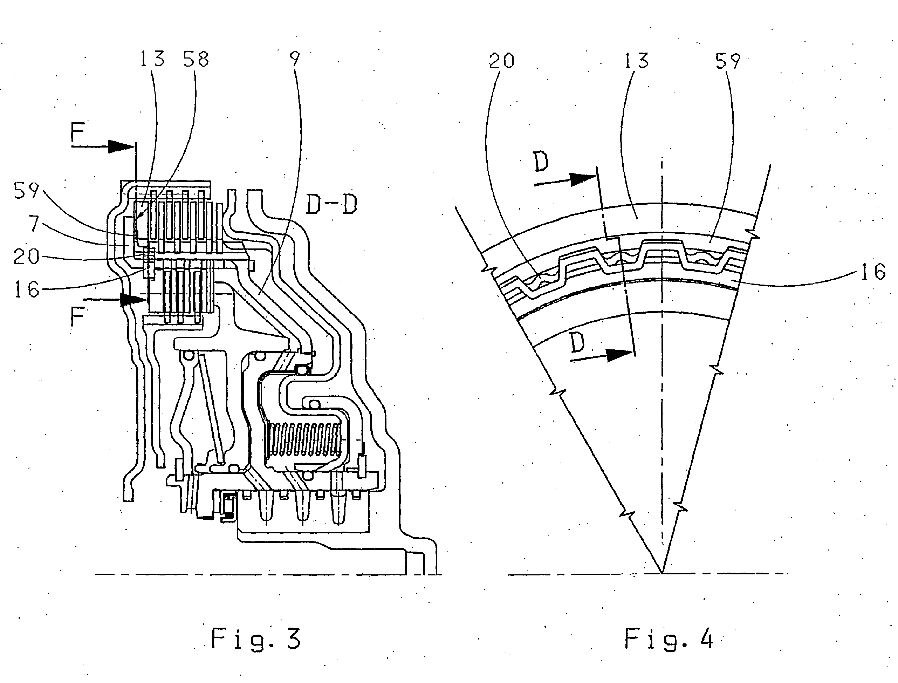

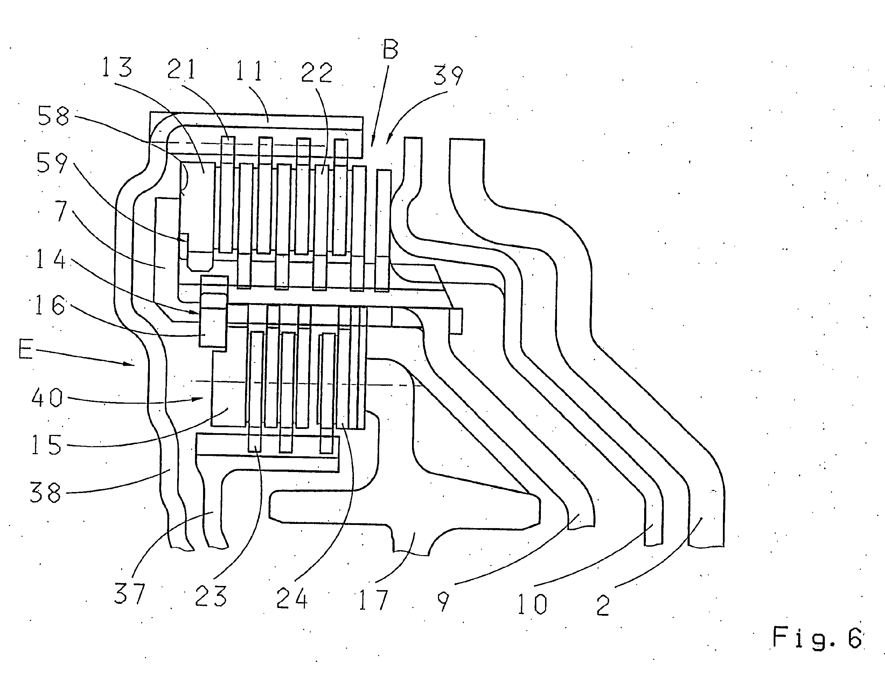

Abweichend von dem geschilderten Aufbau der Kupplungsanordnung gemäß den Fig. 1, 2 und 5 zeigen die Fig. 3, 4 und 6, dass die Endlamelle 13 der radial äußeren Kupplung B an ihrer axial zu dem Anlageabschnitt 7 weisenden Seite gestuft ausgebildet sein kann. Dazu ist beispielsweise der Innendurchmesser dieser Endlamelle 13 so groß gewählt, dass die Anlagefläche 58 der Endlamelle 13 sicher an der dem Anlageabschnitt 7 des gemeinsamen Lamellenträger 9 zur Auflage gelangt.

Zudem gewährleistet die axiale Stufe 59, dass die Endlamelle 13 auf dem gemeinsamen Lamellenträger 9 nicht zu einer Kippbewegung verleitet wird. Auf Anlagenoppen 12 an dem Anlageabschnitt 7 des gemeinsamen Lamellenträger 9 kann bei dieser Ausführungsform der Erfindung dann verzichtet werden.

Dem Fachmann ist klar, dass das in den zuvor beschriebenen Ausführungsbeispielen genannte Getriebegehäuse 2 auch durch ein anderes Bauteil ersetzt sein kann, beispielsweise durch eine rotierende Welle oder einen anderen Kupplungskörper.

### Bezugszeichen

- 1: Getriebewelle
- 2: Getriebegehäuse
- 3: Nabe
- 4: Sicherungsring
- 5: Zylinderabschnitt für die Servoeinrichtung von Kupplung B
- 6: Druckraum für Kupplung B
- 7: Anlageabschnitt am gemeinsamen Lamellenträger
- 8: Druckraum für Kupplung E
- 9: Gemeinsamer Lamellenträger für Kupplung B und E
- 10: Betätigungskolben für Kupplung B
- 11: Achsparalleler Abschnitt am Lamellenträger der Kupplung B
- 12: Anlagenoppen
- 13: Endlamelle der Kupplung B
- 14: Aufnahmenut im gemeinsamen Lamellenträger
- 15: Endlamelle der Kupplung E
- 16: Sprengring, Sicherungsring
- 17: Betätigungskolben der Kupplung E
- 18: Rückstellfeder für den Kolben.der Kupplung E
- 19: Stauscheibe der Kupplung E
- 20: Durchstellung am gemeinsamen Lamellenträger
- 21: Außenlamellen der Kupplung B
- 22: Innenlamellen der Kupplung B
- 23: Innenlamellen der Kupplung E
- 24: Außenlamellen der Kupplung E
- 25: Druckausgleichsraum für die Kupplung B
- 26: Rückstellfeder
- 27: Bohrung oder Umfangsnut in dem Fortsatz 52
- 28: Bohrung oder Umfangsnut in dem Fortsatz 52
- 29: Bohrung oder Umfangsnut in dem Fortsatz 52
- 30: radiales Ende des gemeinsamen Lamellenträgers
- 31: Druckausgleichsraum für die Kupplung E
- 32: Andruckring für Kupplung B
- 33: Andruckring für Kupplung E
- 34: Staublech im Druckausgleichsraum für Kupplung B
- 35: Schließrichtung der Kupplungen B und E
- 36: Sprengring
- 37: Innenlamellenträger der inneren Kupplung E
- 38: Außenlamellenträger der äußeren Kupplung B
- 39: äußeres Lamellenpaket
- 40: inneres Lamellenpaket
- 41: Dichtmittel
- 42: linker "t"-Schenkel des Betätigungskolbens 17
- 43: rechter "t"-Schenkel des Betätigungskolbens 17
- 44: Dichtmittel
- 45: Dichtmittel
- 46: Dichtmittel
- 47: achsparalleler Abschnitt des gemeinsamen Lamellenträgers 9
- 48: Dichtmittel
- 49: Dichtmittel
- 50: achsparalleler Abschnitt des Betätigungskolbens 10
- 51: Befüllleitung für Druckraum 8
- 52: axialer Fortsatz des Getriebegehäuses
- 53: Axiallager
- 54: mittlerer Abschnitt des gemeinsamen Lamellenträgers 9 bzw. radialer Abschnitt der Nabe 3
- 55: Bohrung in der Nabe 3 zur Versorgung des Druckraumes 6
- 56: Bohrung in der Nabe 3 zur Versorgung des Druckausgleichsraums 31
- 57: Bohrung in der Nabe 3 zur Versorgung des Druckausgleichsraumes 25
- 58: Anlagefläche der Endlamelle 13
- 59: Stufe in der Endlamelle 13

## Patentansprüche

1. Kupplungsanordnung in einem Getriebe mit zwei axial und radial benachbarten Lamellenkupplugen (B, E),
bei denen die Innenlamellen (23) der radial inneren Kupplung (E) auf einem Innenlamellenträger (37) und die Außenlamellen (21) der radial äußeren Kupplung (B) auf einem Außenlamellenträger (38) angeordnet sind,
bei der die Innenlamellen (22) der radial äußeren Kupplung (B) und die Außenlamellen (24) der radial inneren Kupplung (E) auf einem gemeinsamen Lamellenträger (9) angeordnet sind,
bei der die jeweiligen Innenlamellen und Außenlamellen der beiden Kupplungen (B, E) axial wechselweise nebeneinander angeordnet Lamellenpakete (39, 40) bilden,
bei der jedem Lamellenpaket (39, 40) ein Betätigungskolben (10, 17) von druckmittelbetätigbaren Servoeinrichtungen zum axialen Zusammenpressen der Lamellenpakete (39, 40) zugeordnet ist, der an dem gemeinsamen Lamellenträger (9) axial verschiebbar gelagert ist,
wobei die beiden Servoeinrichtungen derart angeordnet sind, dass beide Kupplungen (B, E) in die gleiche Richtung (35) schließend betätigbar sind, und
bei der die Lamellen (23, 24) des radial inneren Lamellenpaketes (40) axial gegen einen am gemeinsamen Lamellenträger (9) befestigten Sicherungsring (16) pressbar sind,
**dadurch gekennzeichnet, dass** die lamellen (21, 22) des radial äußeren Lamellenpaketes (39) axial gegen einen Anlageabschnitt (7) des gemeinsamen Lamellenträgers (9) pressbar sind, der aus einem radial nach außen weisenden Endstück des gemeinsamen Lamellenträgers (9) besteht, wobei der gemeinsame Lamellenträger (9) ein Blechumformteil ist, bei dem der Anlageabschnitt (7) integraler Bestandteil desselben und durch einen Umformvorgang gebildet ist.

2. Kupplungsanordnung nach Anspruch 1, **dadurch gekennzeichnet, dass** die Lamellenpakete (39, 40) an ihrer von den Kolben (10, 17) wegweisenden Seite axial jeweils durch eine Endlamelle (13, 15) begrenzt sind.

3. Kupplungsanordnung nach Anspruch 1 oder 2, **dadurch gekennzeichnet, dass** der Sicherungsring (16) in einer Aufnahmenut (14) am gemeinsamen Lamellenträger (9) befestigt ist.

4. Kupplungsanordnung nach Anspruch 3, **dadurch gekennzeichnet, dass** die Aufnahmenut (14) aus zueinander beabstandeten radialen Öffnungen besteht, die umfangsverteilt an dem gemeinsamen Lamellenträger (9) ausgebildet sind.

5. Kupplungsanordnung nach Anspruch 4, **dadurch gekennzeichnet, dass** die die Aufnahmenut (14) bildenden Öffnungen durch Materialeinstiche im gemeinsamen Lamellenträger (9) geformt sind, durch die als Durchstellungen (20) bezeichnete Blechstücke des gemeinsamen Lamellenträgers (9) radial nach außen weisen.

6. Kupplungsanordnung nach Anspruch 5, **dadurch gekennzeichnet, dass** das Profil der Kupplungslammellen, insbesondere der Innenlamellen (22) der radial äußeren Kupplung (B) sowie die radiale Erstreckung der Durchstellungen (20) derart gewählt ist, dass an der radialen Außenseite des gemeinsamem Lamellenträgers (9) genügend Raum für die ganz oder teilweise über den Bereich der Materialeinstiche beziehungsweise Aufnahmenut (14) platzierte Endlamelle (13) der radial äußeren Kupplung (B) vorhanden ist.

7. Kupplungsanordnung nach Anspruch 4, **dadurch gekennzeichnet, dass** die die Aufnahmenut (14) bildenden Öffnungen spanabhebend hergestellt sind als eine durch Zahnlücken unterbrochene, umlaufende Nut.

8. Kupplungsanordnung nach wenigstens einem der vorherigen Ansprüche, **dadurch gekennzeichnet, dass** der Anlageabschnitt (7) des gemeinsamen Lamellenträgers (9) derart geformt ist, dass die Steifigkeit von letzterem positiv beeinflusst ist.

9. Kupplungsanordnung nach wenigstens einem der vorherigen Ansprüche, **dadurch gekennzeichnet, dass** der Anlageabschnitt (7) des gemeinsamen Lamellenträgers (9) an seiner axial zu dem Lamellenpaket (39) der radial äußeren Kupplung (B) weisenden Seite Anlagenoppen (12) aufweist, an der die Endlamelle (13) des Lamellenpaketes (39) zur Anlage kommt.

10. Kupplungsanordnung nach wenigstens einem der Ansprüche 1 bis 9, **dadurch gekennzeichnet, dass** der Anlageabschnitt (7) des gemeinsamen Lamellenträgers (9) an seiner axial zu dem Lamellenpaket (39) der radial äußeren Kupplung (B) weisenden Seite einen Anlagering aufweist, an den die Endlamelle (13) des Lamellenpaketes (39) zur Anlage kommt.

11. Kupplungsanordnung nach wenigstens einem der vorherigen Ansprüche, **dadurch gekennzeichnet, dass** die Endlamelle (13) an ihrer axial zu dem Anlageabschnitt (7) des gemeinsamen Lamellenträgers (9) weisenden Seite eine radial gestufte Oberfläche mit einer Stufe (59) ausweist.

12. Kupplungsanordnung nach Anspruch 10 oder 11, **dadurch gekennzeichnet, dass** die Anlagenoppen (12), der Anlagering oder die Stufe (59) derart ausgebildet sind, dass radial unterhalb dieser Teile befindliche Bestandteile des gemeinsamen Lamellenträger (9) axial übergriffen werden.

13. Kupplungsanordnung nach wenigstens einem der Ansprüche 1 bis 12, **dadurch gekennzeichnet, dass** das Getriebe ein Automatgetriebe ist

14. Kupplungsanordnung nach wenigstens einem der Ansprüche 1 bis 12, **dadurch gekennzeichnet, dass** das Getriebe ein automatisiertes Schaltgetriebe ist, insbesondere in Bauart eines Doppelkupplungsgetriebes.

## Claims

1. Clutch arrangement in a transmission with two neighboring axial and radial multidisk clutches (B, E), where the inner disks (23) of the inner radial clutch (E) are arranged on an inner disk carrier (37) and where the outer disks (21) of the outer radial clutch (B) are arranged on an outer disk carrier (38), where the inner disks (22) of the outer radial clutch (B) and the outer disks (24) of the inner radial clutch (E) are arranged on a shared disk carrier (9), with the inner disks and outer disks of the two clutches (B, E) forming alternating disk packs (39, 40) axially arranged side-by-side, whereby each of these disk packs (39, 40) is assigned an actuating piston (10, 17) from pressure-medium-actuated servo units for axial compression of the disk packs (39, 40), said piston being mounted in an axially moveable position on the shared disk carrier (9), whereby the two servo units are arranged in such a way that both clutches (B, E) can be actuated to close in the same direction (35) and where the disks (23, 24) on the radial inner disk pack (40) can be pressed axially against a retaining ring (16) secured to the shared disk carrier (9),
**characterized in that** the disks (21, 22) on the radial outer disk pack (39) can be pressed axially against a section (7) of the shared disk carrier (9) forming an end piece on this shared disk carrier (9) and protruding outwards in a radial fashion, with the shared disk carrier being a sheet-metal molding of which this section (7) is an integral component formed by a shaping process.

2. Clutch arrangement according to Claim 1, **characterized in that** each disk pack (39, 40) is axially limited by an end disk (13, 15) on the side not facing the pistons (10, 17).

3. Clutch arrangement according to Claim 1 or 2, **characterized in that** the retaining ring (16) is secured in a locating groove (14) on the shared disk carrier (9).

4. Clutch arrangement according to Claim 3, **characterized in that** the locating groove (14) is formed by spaced radial apertures arranged on the circumference of the shared disk carrier (9).

5. Clutch arrangement according to Claim 4, **characterized in that** the apertures forming the locating groove (14) are formed by holes machined into the material of the shared disk carrier (9), through which sheet-metal components designated as deflector plates (20) on the shared disk carrier (9) point outwards in a radial fashion.

6. Clutch arrangement according to Claim 5, **characterized in that** the profile of the clutch disks, especially that of the inner disks (22) of the outer radial clutch (B), and of the radial extension of the deflector plates (20), is chosen in such a way that on the radial outer side of the shared disk carrier (9) there is sufficient space for the end disk (13) of the radial outer clutch (B) to be placed entirely or partially across the area of the machined holes or locating groove (14).

7. Clutch arrangement according to Claim 4, **characterized in that** the apertures forming the locating groove (14) are manufactured by a machining process and take the form of a circumferential groove interrupted by gaps for teeth.

8. Clutch arrangement according to at least one of the preceding Claims, **characterized in that** the section (7) on the shared disk carrier (9) is shaped in such a way that the rigidity of the disk carrier is enhanced.

9. Clutch arrangement according to at least one of the preceding Claims, **characterized in that** the side of the section (7) of the shared disk carrier (9) facing the disk pack (39) axially on the outer radial clutch (B) features studs (12) on which the end disk (13) of the disk pack (39) can make contact.

10. Clutch arrangement according to at least one of Claims 1 to 9, **characterized in that** the section (7) on the shared disk carrier (9) features a stop ring on its side facing axially towards the disk pack (39) of the outer radial clutch (B) on which the end disk (13) of disk pack (39) can make contact.

11. Clutch arrangement according to at least one of the preceding Claims, **characterized in that** the side of the end disk (13) on the disk carrier (9) axially opposite the section (7) of the shared disk carrier (9) features a radially stepped surface with a step (59).

12. Clutch arrangement according to Claim 10 or 11, **characterized in that** the contact studs (12), the stop ring or the step (59) are designed in such a way that components of the shared disk carrier (9) located radially below these parts are axially overlaid.

13. Clutch arrangement according to at least one of Claims 1 to 12, **characterized in that** the transmission is an automatic transmission.

14. Clutch arrangement according to at least one of the Claims 1 to 12, **characterized in that** the transmission is an automatically controlled mechanical transmission, in particular one based on a dual-clutch transmission design.

## Revendications

1. Dispositif d'embrayage contenu dans une boîte de vitesses comportant deux embrayages à disques (B, E) voisins dans la direction axiale et dans la direction radiale,
dans lequel les disques intérieurs (23) de l'embrayage radialement intérieur (E) sont disposés sur un support de disques intérieur (37) et les disques extérieurs (21) de l'embrayage radialement extérieur (B) sont disposés sur un support de disques extérieur (38),
dans lequel les disques intérieurs (22) de l'embrayage radialement extérieur (B) et les disques extérieurs (24) de l'embrayage radialement intérieur (E) sont disposés sur un support de disques commun (9),
dans lequel les disques intérieurs et les disques extérieurs des deux embrayages (B, E) forment des paquets de disques (39, 40) disposés l'un à côté de l'autre en alternance dans la direction axiale,
dans lequel, à chaque paquet de disques (39, 40), est associé un piston d'actionnement (10, 17) de servodispositifs pouvant être actionnés par un milieu de pression, destinés à presser axialement les paquets de disques (39, 40) les uns contre les autres, qui est monté mobile en translation axiale sur le support de disques commun (9),
les deux servodispositifs étant disposés de telle manière que les deux embrayages (B, E) puissent être actionnés en fermeture dans le même sens (35), et
dans lequel les disques (23, 24) du paquet de disques radialement intérieur (40) peuvent être pressés axialement contre une bague d'arrêt (16) fixée au support de disques commun (9),
**caractérisé en ce que** les disques (21, 22) du paquet de disques radialement extérieur (39) peuvent être pressés axialement contre un segment d'appui (7) du support de disques commun (9), qui est constitué par une partie d'extrémité du support de disques commun (9) qui pointe radialement vers l'extérieur, le support de disques commun (9) étant une pièce de tôle façonnée, le segment d'appui (7) étant une partie constitutive intégrée de cette pièce et étant formé par une opération de façonnage.

2. Dispositif d'embrayage selon la revendication 1, **caractérisé en ce que**, sur leur côté éloigné du piston (10, 17), les paquets de disques (39, 40) sont limités axialement chacun par un disque d'extrémité (13, 15).

3. Dispositif d'embrayage selon la revendication 1 ou 2, **caractérisé en ce que** la bague d'arrêt (16) est fixée dans une gorge de réception (14) du support de disques commun (9).

4. Dispositif d'embrayage selon la revendication 3, **caractérisé en ce que** la gorge de réception (14) est composée d'ouvertures radiales espacées les unes des autres, qui sont formées sur le support de disques commun (9), réparties sur une circonférence.

5. Dispositif d'embrayage selon la revendication 4, **caractérisé en ce que** les ouvertures qui forment la gorge de réception (14) sont formées par des encochages de matière dans le support de disques commun (9), à travers lesquels des pièces de tôle du support de disques commun (9), appelées parties traversantes (20), pointent radialement vers l'extérieur.

6. Dispositif d'embrayage selon la revendication 5, **caractérisé en ce que** le profil des disques d'embrayage, en particulier celui des disques intérieurs (22) de l'embrayage radialement extérieur (B) ainsi que l'extension radiale des parties traversantes (20), est choisi de manière que, sur le côté radialement extérieur du support de disques commun (9), on dispose de suffisamment de place pour le disque d'extrémité (13) de l'embrayage radialement extérieur (B) qui est placé entièrement ou partiellement au-delà de la région des encochages de matière ou de la gorge de réception (14).

7. Dispositif d'embrayage selon la revendication 4, **caractérisé en ce que** les ouvertures formant la gorge de réception (14) sont produites par enlèvement de copeaux, sous la forme d'une gorge circonférentielle interrompue par des manques de denture.

8. Dispositif d'embrayage selon au moins l'une des revendications précédentes, **caractérisé en ce que** le segment d'appui (7) du support de disques commun (9) est conformé de telle manière que la rigidité de ce dernier soit influencée dans le sens positif.

9. Dispositif d'embrayage selon au moins l'une des revendications précédentes, **caractérisé en ce que** le segment d'appui (7) du support de disques commun (9) comporte, sur son côté dirigé axialement vers le paquet de disques (39) de l'embrayage radialement extérieur (B), des bossages d'appui (12) contre lesquels le disque d'extrémité (13) du paquet de disques (39) vient s'appuyer.

10. Dispositif d'embrayage selon au moins l'une des revendications 1 à 9, **caractérisé en ce que** le segment d'appui (7) du support de disques commun (9) comporte, sur son côté dirigé axialement vers le paquet de disques (39) de l'embrayage radialement extérieur (B), une bague d'appui contre laquelle le disque d'extrémité (13) du paquet de disques (39) vient s'appuyer.

11. Dispositif d'embrayage selon au moins l'une des revendications précédentes, **caractérisé en ce que** le disque d'extrémité (13) comporte, sur son côté dirigé axialement vers le segment d'appui (7) du support de disques commun (9), une surface étagée dans la direction radiale, qui comporte un épaulement (59).

12. Dispositif d'embrayage selon la revendication 10 ou 11, **caractérisé en ce que** les bossages d'appui (12) de la bague d'appui, ou l'épaulement (59), sont conformés de manière que des parties constitutives du support de disques commun (9) qui se trouvent radialement au-dessous de ces parties soient emboîtées axialement.

13. Dispositif d'embrayage selon au moins l'une des revendications 1 à 12, **caractérisé en ce que** la boîte de vitesses est une boîte de vitesses automatique.

14. Dispositif d'embrayage selon au moins l'une des revendications 1 à 12, **caractérisé en ce que** la boîte de vitesses est une boîte de vitesses à commande automatisée, en particulier du type de construction d'une boîte de vitesses à double embrayage.
